# EUROPÄISCHE PATENTSCHRIFT

(11) **EP 1 719 377 B1**
(45) Veröffentlichungstag und Bekanntmachung des Hinweises auf die Patenterteilung: **25.06.2014**
(21) Anmeldenummer: 04766268.9
(22) Anmeldetag: 20.07.2004
(51) Int. Cl.: H04W 48/16, H04W 8/18, H04W 12/06, H04W 48/18, H04W 84/12, H04W 88/06

(54) **VERFAHREN ZUM ANMELDEN EINES KOMMUNIKATIONSENDGERÄTES IN EINEM DRAHTLOSEN LOKALEN NETZWERK**
METHOD FOR REGISTERING A COMMUNICATION TERMINAL IN A WIRELESS LOCAL AREA NETWORK
PROCEDE PERMETTANT D'ENTRER EN COMMUNICATION AVEC UN TERMINAL DE COMMUNICATION D'UN RESEAU LOCAL SANS FIL

(30) Priorität: 04.12.2003 DE 10356661
(43) Veröffentlichungstag der Anmeldung: 08.11.2006
(73) Patentinhaber: Siemens Aktiengesellschaft, 80333 München (DE)
(72) Erfinder: GRÖTING, Wolfgang, 46149 Oberhausen (DE); SCHMIDT, Malte, 46397 Bocholt (DE)
(86) Internationale Anmeldenummer: PCT/EP2004/051549
(87) Internationale Veröffentlichungsnummer: WO 2005/055633

(56) Entgegenhaltungen:
- GB-A- 2 389 005
- US-A1- 2002 059 453
- US-A1- 2002 187 780

## Beschreibung

Die Erfindung bezieht sich auf ein Verfahren zum Anmelden eines mobilen Kommunikationsendgerätes, das einem zellularen Mobilfunk-System zugehörig ist, in einem drahtlosen lokalen Netzwerk.

Zur Erhöhung der Funktionalität mobiler Kommunikationsendgeräte werden derzeit erhebliche Anstrengungen unternommen, Verfahren zu entwickeln, die es gestatten, ein mobiles Kommunikationsendgerät in einem drahtlosen lokalen Netzwerk, insbesondere einem WLAN, anzumelden. Ziel ist eine Anbindung drahtloser lokaler Netzwerke an zellulare Mobilfunksysteme wie die Systeme 2, 5/3G.

Einem Benutzer des mobilen Kommunikationsendgerätes wird eine Anmeldung in dem drahtlosen lokalen Netzwerk dadurch ermöglicht, dass zur Anmeldung dem zellularen Mobilfunksystem zugeordnete Teilnehmerinformationen in Kombination mit Authentifizierungsprozeduren des zellularen Mobilfunksystems benutzt werden können. Beispiele für solche Authentifizierungsprozeduren sind die EAP-AKA- oder EAP-SIM-Authentifizierung.

Da Anmeldeprozeduren für drahtlose lokale Netzwerke nicht vollständig standardisiert sind, wie es beispielsweise bei den 2,5/3G-Mobilfunksystemen der Fall ist, stehen mehrere Varianten zur Verfügung, eine Anmeldeprozedur durchzuführen. Welche Variante gerade die geeignete ist, hängt von dem drahtlosen lokalen Netzwerk ab, auf das der Benutzer des Kommunikationsendgerätes zugreifen will. Bei einer Anmeldeprozedur in einem drahtlosen lokalen Netzwerk ist es daher erforderlich, im Wege des Ausprobierens diejenige Variante der Anmeldeprozedur aufzufinden, die zur Anmeldung bei einem bestimmten drahtlosen lokalen Netzwerk geeignet ist.

Eine ähnliche Problematik ergibt sich auch für die erforderliche Authentifizierung des Kommunikationsendgerätes in einem drahtlosen lokalen Netzwerk. Diese Netzwerke stellen üblicher Weise nur in sehr geringem Umfang Informationen über eine Authentifizierungsmethode bereit, die bei Anmeldung in diesem Netzwerk einzuhalten ist.

Allgemein ist darauf hinzuweisen, dass zur Anmeldung eines mobilen Kommunikationsendgerätes in einem drahtlosen lokalen Netzwerk grundsätzlich zwei Möglichkeiten bestehen. Bei einer ersten Alternative werden bestimmte Frequenzbereiche gescannt, in denen Zugriffspunkte eines drahtlosen lokalen Netzwerks ihre Kennungen (SSID) ausstrahlen. Mit Hilfe dieser Kennung erfolgt dann die Einleitung der Anmeldeprozedur. Bei einer zweiten Alternative kann in dem mobilen Kommunikationsendgerät bereits eine Kennung eines drahtlosen lokalen Netzwerks gespeichert sein, so dass in dem Fall, wenn eine Anmeldung bei dem betreffenden drahtlosen lokalen Netzwerk gewünscht wird, gezielt diese Kennung abgefragt wird.

Die vorstehend erläuterten Verfahren zum Anmelden eines mobilen Kommunikationsendgerätes in einem drahtlosen lokalen Netzwerk haben den Nachteil, dass entweder umfangreiche Suchverfahren durchzuführen sind, um erforderliche Informationen für eine Anmeldung in einem drahtlosen lokalen Netzwerk zu erhalten, oder Kennungen der drahtlosen lokalen Netzwerke vorab, üblicher Weise manuell, in das mobile Kommunikationsendgerät eingegeben werden müssen.

Aus der US 2002/0187780 A1 ist ein drahtloses inter-netzwerkfähiges zellulares Kommunikationssystem mit einem intelligenten Weiterreichen von Inter-Netzwerkverbindungen bekannt, bei dem ein Multi-Mode-Mobilgerät Inter-Netzwerkverbindungen in Abhängigkeit davon weiterreicht, ob ein bevorzugtes Netzwerk in einer Erreichbarkeitstabelle vorhanden ist, die in einem Speicher entweder des Mobilgerätes oder einer Netzwerksteuereinrichtung abgelegt ist. Die Erreichbarkeitstabelle enthält neben Kennungen der einzelnen Zellen des drahtlosen Kommunikationssystems, insbesondere sofern vorhanden, den Zellenkennungen zugeordnete Erreichbarkeitsinformationen in Form einer "Ja/Nein"-Aussage über in einer Zelle des Kommunikationssystems möglicherweise vorhandene lokale (private/proprietäre) drahtlose Netzwerke. Die Erreichbarkeitstabelle kann einerseits entweder bereits werksseitig bei der Geräteherstellung oder als Tabellen-Download und andererseits durch eine Eigenkonfiguration über das Gerät, sobald dieses neue Netzwerke bei einer Netzwerksuche entdeckt, mit den vorstehend erwähnten Informationen und gegebenenfalls weiterer Netzwerkidentifikationen befüllt werden. Bevor das Mobilgerät in einer Zelle, zu der es die zugehörige Zellenkennung erhalten hat, aktiv wird und nach weiteren Netzwerken sucht, wird die Erreichbarkeitstabelle auf einen Eintrag in Bezug auf die erhaltene Zellenkennung überprüft. In Abhängigkeit von dieser Eintragsüberprüfung, z.B. bei einer "Ja"-Aussage, sucht das Mobilgerät im Weiteren nach nur einem einzigen von möglicherweise mehreren Netzwerken. Wird hingegen kein gültiger Eintrag festgestellt, z.B. weder eine "Ja"-Aussage noch eine "Nein"-Aussage, wird von dem Mobilgerät ein Update der Tabelle durchgeführt.

Aus der GB 2389005 A ist ein Verfahren zum Betreiben einer Mobilstation in einem zellularen Mobil-Kommunikationssystem mit WLAN-Anbindung bekannt, bei dem die Akkubelastung der Mobilstation im Zusammenhang mit der Suche nach WLAN-Services, insbesondere dann wenn ein WLAN-Netzwerk nicht in der Nähe der Mobilstation vorhanden ist, und der damit der Energieverbrauch signifikant reduziert wird. Dies wird dadurch erreicht, dass in einem Speicher der Mobilstation Informationen mit Bezug auf die Funkabdeckung einer Vielzahl von drahtlosen Netzwerken gespeichert werden, der Aufenthaltsort der Mobilstation erfasst wird, die erfasste Information über den Aufenthaltsort der Mobilstation mit der gespeicherten Funkabdeckungsinformation der drahtlosen Netzwerke verglichen wird und eine Alarmsignal generiert wird, sobald sich die Mobilstation in der Nähe eines drahtlosen Netwerkes befindet, so dass die Mobilstation nun zielgerichtet nach dem in der Nähe befindlichen lokalen Netzwerk suchen kann.

In der US 2002/0059453 A1 ist ein Verfahren und ein System zum Bereitstellen von Zugriffsinformation an eine Kommunikationsvorrichtung offenbart, welche die Position, die zugehörigen kombinierten Anforderungen und die für die Kommunikationsvorrichtung verfügbaren Zugriffspunkte ermittelt. Die kombinierten Anforderungen basieren auf Präferenzen des Benutzers und den Dienste-/Anwendungs-Anforderungen. Die verfügbaren Zugriffspunkte werden dann unter Verwendung der Position und kombinierten Anforderungen zugeordnet. Diese Zuordnung und andere Informationen hinsichtlich der Zugriffspunkte können dann zum Ermitteln und Auswählen eines optimalen oder eines anderen Zugriffspunktes für die Kommunikationsvorrichtung verwendet werden. Die Information wird dann analysiert und dem Benutzer mit Empfehlungen und Richtungen dargestellt.

Ausgehend hiervon liegt der Erfindung die Aufgabe zugrunde, ein Verfahren zum Anmelden eines mobilen Kommunikationsendgerätes, das einem zellularen Mobilfunk-System zugehörig ist, in einem drahtlosen lokalen Netzwerk zu schaffen, das in seinem Zeitaufwand vermindert ist.

Diese Aufgabe wird durch ein Verfahren nach dem Patentanspruch 1 gelöst.

Danach ist vorgesehen ein Verfahren zum Anmelden eines mobilen Kommunikationsendgerätes, das einem zellularen Mobilfunk-System zugehörig ist, in einem drahtlosen lokalen Netzwerk, mit den Schritten:
a) Zugreifen des Kommunikationsendgerätes auf einen Speicher, der eine Zuordnung zwischen Zellenkennungen des zellularen Mobilfunksystems und in den Zellen des Mobilfunksystems früher aufgefundenen Kennungen drahtloser lokaler Netzwerke enthält,
b) wenn der Speicher zu einer Kennung einer Mobilfunkzelle, in der sich das mobile Kommunikationsendgerät aktuell befindet, eine Anmeldeinformation zur Anmeldung in einem drahtlosen lokalen Netzwerk enthält, Anmelden des Kommunikationsendgerätes in dem zugehörigen drahtlosen lokalen Netzwerk,
c) wenn der Speicher zu einer Kennung einer Mobilfunkzelle, in der sich das mobile Kommunikationsendgerät aktuell befindet, keine Anmeldeinformationen zur Anmeldung in einem drahtlosen lokalen Netzwerk enthält, Durchführen eines Suchverfahrens nach Kennungen von drahtlosen lokalen Netzwerken und bei Auffinden von Kennungen eines drahtlosen lokalen Netzwerks Speichern derselben in dem Speicher unter Zuordnung zu der Kennung der aktuellen Zelle des zellularen Mobilfunksystems und Anmelden in dem zugehörigen lokalen Netzwerk.

Ein verminderter Zeitaufwand zur Anmeldung eines einem zentralen Mobilfunk-System zugehörigen mobilen Kommunikationsendgerätes in einem drahtlosen lokalen Netzwerk ergibt sich dadurch, dass in den Schritten a) und b) auf einen Speicher zugegriffen wird, der A-Priori-Informationen über zur Anmeldung erforderliche Kennungen drahtloser lokaler Netzwerke enthält, und zwar in Bezug auf die Mobilfunkzellen, die in dem zellularen Mobilfunk-System vorgesehen sind. Dieser Speicher kann entweder in dem Kommunikationsendgerät selbst vorgesehen sein. Es ist jedoch auch denkbar, dass der Speicher an anderer Stelle in dem zellularen Mobilfunk-System angeordnet ist, beispielsweise an einer Basisstation. An dieser Basisstation können dann die Kennungen früher aufgefundener drahtloser lokaler Netzwerke abgerufen werden und zu Anmeldezwecken verwendet werden.

In dem Fall, wenn der Speicher keinen Eintrag für die aktuelle Zelle enthält, in der sich das Kommunikationsendgerät gerade befindet, wird der Inhalt des Speichers insofern aktualisiert, dass etwaige im Rahmen eines Sucherverfahrens aufgefundene drahtlose lokale Netzwerke in Form ihrer Kennung zusätzlich in dem Speicher abgelegt werden, und zwar in Zuordnung zu der Kennung der aktuellen Mobilfunkzelle.

Auf diese Weise werden im Mittel die erforderlichen Zeiträume für das Auffinden und die Anmeldung in drahtlosen lokalen Netzwerken (WLANs) verkürzt, da mit steigendem Speicherinhalt die Wahrscheinlichkeit dafür ansteigt, dass für einen Anmeldevorgang zu einem bestimmten drahtlosen lokalen Netzwerk in der aktuellen Mobilfunkzelle die notwendige Kennung vorhanden ist.

Ein weiterer Vorteil des Verfahrens besteht darin, dass durch Verminderung der Anzahl durchzuführender Suchverfahren elektrische Leistung auf Seiten des mobilen Kommunikationsendgerätes eingespart werden kann.

Bevorzugt werden bei der Durchführung des Suchverfahrens in Schritt c) aufgefundene Authentifizierungsinformationen eines drahtlosen lokalen Netzwerks in dem Speicher unter Zuordnung zu der Kennung der aktuellen Zelle des zellularen Mobilfunksystems gespeichert. Da, wie bereits einleitend ausgeführt, verschiedene lokale drahtlose Netzwerke voneinander abweichende Authentifizierungsprozeduren benutzen können, wird ein Anmeldeprozess durch das Speichern aufgefundener Authentifizierungsinformationen weiter beschleunigt.

Für eine schnelle Durchführung des Verfahrens ist es ebenfalls von Vorteil, wenn die in Schritt c) aufgefundenen Kennungen und Authentifizierungsinformationen eines aufgefundenen drahtlosen lokalen Netzwerks in dem Speicher sowohl der Kennung der aktuellen Zelle als auch weiteren, in einem "aktiven Satz" (im Englischen: "active set") des Kommunikationsendgerätes enthaltenen Kennungen von Zellen des zellularen Mobilfunksystems zugeordnet werden.

Dazu ist zu erläutern, dass ein "aktiver Satz" eines mobilen Kommunikationsendgerätes Kennungen von Mobilfunkzellen des zellularen Mobilfunksystems enthält, die für einen Hand-over in Frage kommen, d. h. Mobilfunkzellen betreffen, die derjenigen Mobilfunkzelle, in der sich das Kommunikationsendgerät gerade befindet, benachbart sind.

Auf diese Weise wird es ermöglicht, dass sich ein mobiles Kommunikationsendgerät in ein drahtloses lokales Netzwerk einbucht, das in einer Nachbarzelle vorhanden ist, wenn die gerade aktuelle Mobilfunkzelle keinen Zugang zu einem drahtlosen lokalen Netzwerk gestattet.

In dem Speicher können zusätzlich benutzte Frequenzkanäle für ein aufgefundenes drahtloses lokales Netzwerk gespeichert werden, wodurch die erforderlichen Informationen für die Anmeldeprozedur bei diesem Netzwerk weiter vervollständigt werden.

Außerdem können in Schritt c) zusätzlich von den aufgefundenen drahtlosen lokalen Netzwerken bereitgestellte Dienste gespeichert werden, so dass das mobile Kommunikationsendgerät durch Zugriff auf den Speicher in einfacher Form Informationen darüber gewinnen kann, ob ein gerade von dem Benutzer gewünschter Dienst von einem aufgefundenen drahtlosen lokalen Netzwerk zur Verfügung gestellt wird. Ggf. kann in dem Fall, wenn der gewünschte Dienst nicht angeboten wird, das Verfahren derart weitergeführt werden, dass nach einem geeigneten drahtlosen lokalen Netzwerk gesucht wird, bei dem dann die Anmeldeprozedur durchgeführt wird. Auch die Informationen über die jeweils bereitgestellten Dienste können im Rahmen eines früheren Anmeldevorgangs bzw. einer bestehenden Kommunikationsverbindung zu dem Netzwerk gewonnen und in diesem Zuge in dem Speicher abgelegt werden, und zwar unter Zuordnung zu der Kennung der Mobilfunkzelle, in der sich das Kommunikationsendgerät zu diesem Zeitpunkt befand.

Aufgrund des Durchführens des Suchverfahrens in Schritt c) für die aktuelle Zelle kann eine Dichte an drahtlosen lokalen Netzwerken berechnet und in dem Speicher der Kennung der aktuellen Zelle zugeordnet werden. Diese Dichte kann beispielsweise auch dem Wert "Null" entsprechen, so dass in der betreffenden Mobilfunkzelle der Versuch eines Aufbaus einer Kommunikationsverbindung zu einem drahtlosen lokalen Netzwerk von vornherein nicht unternommen wird. Die auf diese Weise gewonnenen Dichtewerte können außerdem dafür benutzt werden, eine Überwachung hinsichtlich möglicher Weise vorhandener drahtloser lokaler Netzwerke durchzuführen, wenn diese Dichte beispielsweise einen vorgegebenen Schwellwert überschreitet. In diesem Fall kann mit vorgegebener Zeitperiode eine regelmäßige Überwachung der vorhandenen drahtlosen lokalen Netzwerke in der aktuellen Mobilfunkzelle stattfinden.

Im Sinne dieser Erfindung werden unter mobilen Kommunikationsendgeräten solche Geräte verstanden, die sowohl eine Schnittstelle zu einem zellularen Mobilfunksystem, wie GSM, UMTS usw., als auch zu einem drahtlosen lokalen Netzwerk wie die in dem ETSI-Projekt BRAN diskutierten Standards Hyper LAN/2, Hyper Access, Hyper Link, aber auch IEEE802.11 und den zugehörigen Unterstandard besitzen.

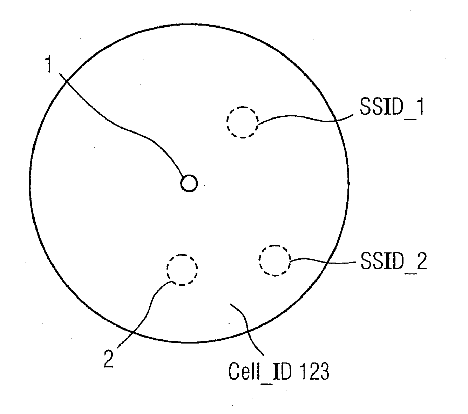

Die Erfindung wird nachfolgend anhand der einzigen Zeichnung noch weiter erläutert, die in schematischer Darstellung eine Mobilfunkzelle eines zellularen Mobilfunksystems zeigt, in der mehrere Zugriffspunkte (im Englischen: "Access Points") für WLANs vorhanden sind.

Die in der Figur veranschaulichte Mobilfunkzelle wird aufgespannt durch eine Basisstation 1, deren Reichweite idealisiert in Form eines Kreises dargestellt ist. Der Mobilfunkzelle ist eine Kennung (Cell_ID) zugeordnet, im vorliegenden Ausführungsbeispiel lautet die Kennung "1 2 3".

Innerhalb der Mobilfunkzelle befinden sich außerdem zwei Zugriffspunkte, die jeweils einem gesonderten WLAN-System zugeordnet sind. Die Kennung eines ersten WLAN-Sytems ist "SSID_1", während die Kennung eines zweiten WLAN-Systems "SSID_2" lautet.

Als Service Set ID (SSID) wird der Netzwerkschlüssel in WLANS bezeichnet, mit dem ein betreffendes WLAN in verschiedene Segmente eingeteilt wird. Dieser Netzwerkschlüssel ist für alle Zugriffspunkte des zugehörigen WLANs (drahtloses lokales Netzwerk) identisch und wird bei einer Konfiguration des WLANs festgelegt. Dadurch kann beispielsweise ein mobiles Kommunikationsendgerät 2 als WLAN-Client einem bestimmten drahtlosen lokalen Netzwerk oder Netzwerk-Segment zugeordnet werden. Damit das Kommunikationsendgerät 2 das gewünschte WLAN-Segment findet, versenden die Zugriffspunkte SSID_1, SSID_2 in regelmäßigen Abständen sog. Management-Frames mit ihrer SSID, d. h. der Kennung des WLANs, zu dem sie gehören. Alternativ können die mobilen Kommunikationsendgeräte 2, die sich in der Mobilfunkzelle befinden, auch Anfragen an die Zugriffspunkte versenden, um eine bestimmte Kennung zu finden.

In dem Fall, wenn sich das in der Mobilfunkzelle befindliches mobiles Kommunikationsendgerät 2 in einem drahtlosen lokalen Netzwerk anmelden will, wird das folgende Verfahren durchgeführt:
Zunächst greift das Kommunikationsendgerät 2 auf einen Speicher zu, der eine Zuordnung zwischen Zellenkennungen des zellularen Mobilfunksystems und in den Zellen des Mobilfunksystems früher aufgefundenen Kennungen drahtloser lokaler Netzwerke enthält. Im vorliegenden Ausführungsbeispiel wird der Speicher von demjenigen Speicher gebildet, der den sog. "aktiven Satz" für das mobile Kommunikationsendgerät 2 enthält. Zu diesem "aktiven Satz" gehört insbesondere die Kennung (Cell-ID) der Mobilfunkzelle, in der sich das mobile Kommunikationsendgerät 2 aktuell befindet.

In Zuordnung zu dieser Kennung enthält der Speicher eine Reihe von Einträgen, die Anmeldeinformationen zur Anmeldung in drahtlosen lokalen Netzwerken bilden. Diese Einträge stammen aus früheren Anmeldeprozeduren in derselben Mobilfunkzelle. Für jede dieser früheren Anmeldeprozeduren sind folgende Informationen in Zuordnung zu der Kennung der Mobilfunkzelle gespeichert: SSID des aufgefundenen WLANs, Bezeichnung des WLANs, Authentifizierungsverfahren, Dienstklasse, benutzte Frequenzkanäle bei der früheren Anmeldeprozedur, usw.. Dabei ist hervorzuheben, dass bereits allein die Information über die SSID eines in derselben Mobilfunkzelle früher gefundenen WLANs im Vergleich zum Stand der Technik bereits ein beschleunigtes Anmeldeverfahren ermöglicht. Die weiteren Informationen sind hilfreich, können jedoch bei Ausführungsformen der Erfindung mit Hilfe geeigneter Suchverfahren ermittelt werden.

Die Anmeldeinformationen für früher in derselben Mobilfunkzelle aufgefundene WLANs sind als Erweiterungen des "aktiven Satzes" zu der aktuellen Mobilfunkzelle - im vorliegenden Fall mit der Kennung "1 2 3" - gespeichert sein.

Eine zusätzliche Erweiterung des "aktiven Satzes" besteht aus einer Information über eine Dichte für lokale drahtlose Netzwerke in der Mobilfunkzelle mit der gerade maßgeblichen Kennung. Ist beispielsweise diese Dichte hoch, d. h. ein vorgegebener Schwellwert ist überschritten, kann eine bei dem mobilen Kommunikationsendgerät 2 vorgesehene Schnittstelle für drahtlose lokale Netzwerke in einen Modus geschaltet werden, bei dem eine aktive Überwachung für WLANs stattfindet.

Dann erfolgt eine Überwachung in vorgegebenen Zeitintervallen.

Bei dem vorliegenden Ausführungsbeispiel trägt das drahtlose lokale Netzwerk SSID_1 die Bezeichnung "Flughafen München", das Authentifizierungsverfahren ist "EAP SIM", eine Dienstklasse wird außerdem angegeben.

Bei dem zweiten drahtlosen lokalen Netzwerk SSID_2 lautet die Bezeichnung "Café Luga", bei dem das Authentifizierungsverfahren "WPA" mit der Identifizierung "GR354" anzuwenden ist. Auch Informationen über eine Dienstklasse liegen vor.

Sofern der Speicher einen Eintrag für eine aktuelle Zelle des Kommunikationsendgerätes 2 enthält, meldet sich das Kommunikationsendgerät 2 in dem zugehörigen drahtlosen lokalen Netzwerk an, ggf. nur dann, wenn bestimmte Anforderungen erfüllt sind, die sich auf das Vorhandensein einer gewünschten Mindestdienstklasse beziehen können.

In dem Fall, wenn der Speicher keinen Eintrag für die aktuelle Stelle enthält, wird in bekannter Weise ein Suchverfahren nach Kennungen von drahtlosen lokalen Netzwerken durchgeführt. Sofern eine Kennung eines drahtlosen lokalen Netzwerks innerhalb der Mobilfunkzelle aufgefunden wird, wird diese in dem Speicher unter Zuordnung zu der Kennung der aktuellen Stelle des zellularen Mobilfunksystems gespeichert, und zwar in Kombination mit weiteren Informationen, die insbesondere einen Anmeldeprozess beschleunigen können wie Authentifizierungsinformationen und benutzte Frequenzkanäle.

Die vorstehend erläuterten Informationen zur Beschleunigung eines Anmeldeverfahrens des mobilen Kommunikationsendgerätes 2 in einem drahtlosen lokalen Netzwerk werden nicht nur in Zuordnung zu der Kennung der gerade aktuellen Mobilfunkzelle gespeichert, sondern auch in Zuordnung zu Kennungen benachbarter Mobilfunkzellen, die in dem "aktiven Satz" enthalten sind und für die Durchführung eines Hand-overs in Frage kommen.

## Patentansprüche

1. Verfahren zum Anmelden eines mobilen Kommunikationsendgerätes (2), das einem zellularen Mobilfunk-System zugehörig ist, in einem drahtlosen lokalen Netzwerk, mit den Schritten:
a) Zugreifen des Kommunikationsendgerätes (2) auf einen Speicher, der eine Zuordnung zwischen Zellenkennungen des zellularen Mobilfunksystems und in den Zellen des Mobilfunksystems früher aufgefundenen Kennungen drahtloser lokaler Netzwerke enthält,
b) wenn der Speicher zu einer Kennung einer Mobilfunkzelle, in der sich das mobile Kommunikationsendgerät aktuell befindet, eine Anmeldeinformation zur Anmeldung in einem drahtlosen lokalen Netzwerk enthält, Anmelden des Kommunikationsendgerätes (2) in dem zugehörigen drahtlosen lokalen Netzwerk,
c) wenn der Speicher zu einer Kennung einer Mobilfunkzelle, in der sich das mobile Kommunikationsendgerät aktuell befindet, keine Anmeldeinformationen zur Anmeldung in einem drahtlosen lokalen Netzwerk enthält, Durchführen eines Suchverfahrens nach Kennungen von drahtlosen lokalen Netzwerken und bei Auffinden von Kennungen eines drahtlosen lokalen Netzwerks Speichern derselben in dem Speicher unter Zuordnung zu der Kennung der aktuellen Zelle des zellularen Mobilfunksystems und Anmelden in dem zugehörigen lokalen Netzwerk.

2. Verfahren nach Anspruch 1,
bei dem in Schritt c) bei der Durchführung des Suchverfahrens aufgefundene Authentifizierungsinformationen eines drahtlosen lokalen Netzwerks in dem Speicher unter Zuordnung zu der Kennung der aktuellen Zelle des zellularen Mobilfunksystems gespeichert werden.

3. Verfahren nach Anspruch 1 oder 2,
bei dem in Schritt c) aufgefundene Kennungen und Authentifizierungsinformationen eines drahtlosen lokalen Netzwerks in dem Speicher sowohl der Kennung der aktuellen Zelle als auch weiteren, in einem "aktiven Satz" des Kommunikationsendgerätes (2) enthaltenen Kennungen von Zellen des zellularen Mobilfunksystems zugeordnet werden.

4. Verfahren nach einem der Ansprüche 1 bis 3,
bei dem in Schritt c) zusätzlich benutzte Frequenzkanäle für ein aufgefundenes drahtloses lokales Netzwerk gespeichert werden.

5. Verfahren nach einem der Ansprüche 1 bis 4,
bei dem in Schritt c) zusätzlich von dem aufgefundenen drahtlosen lokalen Netzwerk bereitgestellte Dienste gespeichert werden.

6. Verfahren nach einem der Ansprüche 1 bis 5,
bei dem aufgrund des Durchführens des Suchverfahrens in Schritt c) für die aktuelle Zelle eine Dichte an drahtlosen lokalen Netzwerken berechnet und in dem Speicher der Kennung der aktuellen Zelle zugeordnet wird.

7. Verfahren nach Anspruch 1,
bei dem in Schritt b) eine Anmeldung des Kommunikationsendgerätes (2) in dem zugehörigen drahtlosen lokalen Netzwerk nur dann erfolgt, wenn bestimmte Anforderungen erfüllt sind, die sich auf das Vorhandensein einer gewünschten Mindestdienstklasse beziehen.

8. Mobiles Kommunikationsendgerät, **gekennzeichnet durch** Mittel zur Durchführung des Verfahrens zum Anmelden des mobilen Kommunikationsendgerätes in einem drahtlosen lokalen Netzwerk nach einem der Ansprüche 1 bis 7.

## Claims

1. Method for registering a mobile communication terminal (2), which is associated with the cellular mobile radio system, in a wireless local area network, having the following steps:
a) the communication terminal (2) accesses a memory that contains an association between cell identifiers for the cellular mobile radio system and identifiers that have been found in the cells of the mobile system previously for wireless local area networks,
b) if the memory contains a piece of registration information pertaining to registration in a wireless local area network for an identifier for a mobile radio cell that currently contains the mobile communication terminal, the communication terminal (2) is registered in the associated wireless local area network,
c) if the memory does not contain a piece of registration information pertaining to registration in a wireless local area network for an identifier for a mobile radio cell that currently contains the mobile communication terminal, a search process for identifiers for wireless local area networks is performed and, if identifiers for a wireless local area network are found, said identifiers are stored in the memory in an association with the identifier of the current cell of the cellular mobile radio system, and registration in the associated local area network takes place.

2. Method according to Claim 1,
in which step c) involves authentication information found for a while a circle area network during the performance of the search process being stored in the memory in association with the identifier of the current cell of the cellular mobile radio system.

3. Method according to Claim 1 or 2,
in which step c) involves identifiers and authentication information found for a wireless local area network being associated in the memory both with the identifier of the current cell and with further identifiers, which an "active set" of the communication terminal (2) contains, for cells of the cellular mobile radio system.

4. Method according to one of Claims 1 to 3,
in which step c) additionally involves frequency terminals used being stored for a wireless local area network that has been found.

5. Method according to one of Claims 1 to 4,
in which step c) additionally involves services provided by the wireless local area network that has been found that has been found being stored.

6. Method according to one of Claims 1 to 5,
in which the performance of the search process in step c) is taken as a basis for calculating a density of wireless local area networks for the current cell and associating said density with the identifier of the current cell in the memory.

7. Method according to Claim 1
in which step b) involves the communication terminal (2) being registered in the associated wireless local area network only if particular requirements are met that relate to the existence of a desired minimum service class.

8. Mobile communication terminal, **characterized by** means for performing a method for registering the mobile communication terminal in a wireless local area network according to one of Claims 1 to 7.

## Revendications

1. Procédé de connexion d'un terminal de communication mobile (2), qui fait partie d'un système radio mobile cellulaire, dans un réseau local sans fil, comportant les étapes suivantes :
a) accès du terminal de communication (2) à une mémoire qui contient une association entre des identifiants de cellules du système radio mobile cellulaire et des identifiants de réseaux locaux sans fil qui ont été trouvés auparavant dans les cellules du système radio mobile ;
b) lorsque la mémoire contient, pour un identifiant d'une cellule radio mobile dans laquelle se trouve actuellement le terminal de communication mobile, une information de connexion pour la connexion dans un réseau local sans fil, connexion du terminal de communication (2) dans le réseau local sans fil associé ;
c) lorsque la mémoire ne contient, pour un identifiant d'une cellule radio mobile dans laquelle se trouve actuellement le terminal de communication mobile, aucune information de connexion pour la connexion dans un réseau local sans fil, exécution d'une procédure de recherche d'identifiants de réseaux locaux sans fil et, à la découverte d'identifiants d'un réseau local sans fil, sauvegarde de ceux-ci dans la mémoire avec association à l'identifiant de la cellule actuelle du système radio mobile cellulaire et connexion dans le réseau local associé.

2. Procédé selon la revendication 1, selon lequel des informations d'authentification d'un réseau local sans fil trouvées lors de l'exécution de la procédure de recherche sont, à l'étape c), sauvegardées dans la mémoire avec association à l'identifiant de la cellule actuelle du système radio mobile cellulaire.

3. Procédé selon la revendication 1 ou 2, selon lequel des identifiants et des informations d'authentification d'un réseau local sans fil trouvés sont, à l'étape c), associés, dans la mémoire, non seulement à l'identifiant de la cellule actuelle, mais aussi à d'autres identifiants de cellules du système radio mobile cellulaire contenus dans un « ensemble actif » du terminal de communication (2).

4. Procédé selon l'une des revendications 1 à 3, selon lequel sont additionnellement sauvegardés, à l'étape c), des canaux de fréquence utilisés pour un réseau local sans fil trouvé.

5. Procédé selon l'une des revendications 1 à 4, selon lequel sont additionnellement sauvegardés, à l'étape c), des services fournis par le réseau local sans fil trouvé.

6. Procédé selon l'une des revendications 1 à 5, selon lequel, sur la base de l'exécution de la procédure de recherche à l'étape c) pour la cellule actuelle, une densité de réseaux locaux sans fil est calculée et est associée, dans la mémoire, à l'identifiant de la cellule actuelle.

7. Procédé selon la revendication 1, selon lequel une connexion du terminal de communication (2) dans le réseau local sans fil associé ne se produit, à l'étape b), que si certaines exigences qui se réfèrent à la présence d'une classe de services minimale souhaitée sont remplies.

8. Terminal de communication mobile, **caractérisé par** des moyens pour exécuter le procédé de connexion du terminal de communication mobile dans un réseau local sans fil selon l'une des revendications 1 à 7.
